# EUROPÄISCHE PATENTANMELDUNG

(11) **EP 0 752 500 A1**
(43) Veröffentlichungstag der Anmeldung: **08.01.1997**
(21) Anmeldenummer: 95110414.0
(22) Anmeldetag: 04.07.1995
(51) Int. Cl.: E01C 5/22, E01C 5/00

(54) **Verbundplatte**

(71) Anmelder: E. Schwenk Zementwerke KG, D-89077 Ulm (DE)
(72) Erfinder: Keller, Gottfried, D-89604 Allmendingen (DE); Baumgartner, Heinz, D-89275 Elchingen (DE)
(74) Vertreter: Stahl, Gerhard F.W.

(57) **Zusammenfassung**

Verbundplatte, die an den Randflächen mit Nocken 24 und mit Nischen 26 versehen ist, die eine dreidimensionale Verzahnung benachbarter Verbundplatten bewirken. Die Nocken 24 haben nach oben freiliegende, schräg nach außen abfallende, im wesentlichen dreieckige oder kegelige Flächen 28, wogegen die Nischen 26 von oben verdeckte, schräg nach innen abfallende, im wesentlichen dreieckige oder kegelige Flächen 30 haben. Am unteren Endbereich jedes Nockens 24 ist eine nach außen vorspringende Zentriernase 32 angeordnet, die einen einheitlichen Spalt von bestimmter Breite zwischen den geneigten Flächen 28, 30 ineinandergreifender Nocken 24 und Nischen 26 benachbarter Verbundplatten bewirkt.

## Beschreibung

Die Erfindung betrifft eine Verbundplatte, die randseitig mit Nocken und Nischen versehen ist, die eine dreidimensionale Verzahnung benachbarter Verbundplatten bewirken, wobei die Nocken nach oben freiliegende, schräg nach außen abfallende, im wesentlichen dreieckige oder kegelige Flächen haben und wobei die Nischen von oben verdeckte, schräg nach innen abfallende, im wesentlichen dreieckige oder kegelige Flächen haben.

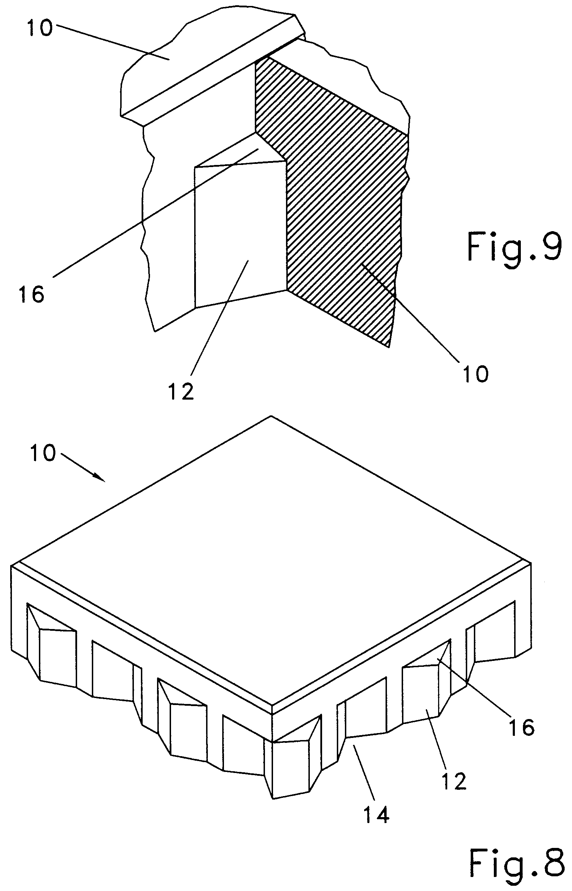

Eine Verbundplatte dieser Gattung ist in den Unterlagen des DE-U-70 28 919 beschrieben und in den Fig. 8, 9 und 10 der beiliegenden Zeichnungen schematisch dargestellt. Die Ausbildung einer solchen bekannten Verbundplatte ist in den Fig. 8 und 9 der beiliegenden Zeichnungen dargestellt. Die quaderförmige Verbundplatte 10 ist an ihren Seitenflächen mit Nocken 12 und Nischen 14 versehen, wobei die Nocken 12 nach oben freiliegende, schräg nach außen abfallende dreieckige Flächen 16 haben und wobei die Nischen 14 von oben verdeckte, schräg nach innen abfallende, dreieckige Flächen 18 haben. Die Nocken 12 und die Nischen 14 sind an den Seitenflächen der Verbundplatte 10 derart angeordnet, daß sie eine dreidimensionale Verzahnung benachbarter Verbundplatten bewirken, d.h. die Nocken 12 einer Verbundplatte 10 greifen formschlüssig in die Nischen 14 einer benachbarten Verbundplatte 10 ein, wie dies in Fig. 9 schematisch dargestellt ist. Dabei handelt es sich aber um den Idealfall, daß die obere Fläche 16 eines Nockens 12 an der unteren Fläche 18 der Nische 14 bündig anliegt. Um diesen Zustand überhaupt erreichen zu können, ist ein Unterbau aus Kies und eine Bettung aus Beton erforderlich. Aber auch dann ist ein bündiges Aneinanderliegen der geneigten Flächen der Nocken und Nischen benachbarter Verbundplatten noch nicht gewährleistet, weil sich eine absolut ebene Betonfläche in der Praxis nur schwer verwirklichen läßt. Geringe Unebenheiten des Untergrunds haben aber zur Folge, daß benachbarte Verbundplatten nicht absolut parallel sind, so daß es zwischen den ineinandergreifenden Nocken und Nischen nicht zu einer Flächen-, sondern lediglich zu einer Linienberührung oder gar zu einer Punktberührung kommt. Eine solche Linien- oder Punktberührung hat aber eine Konzentration der Abstützkräfte zur Folge, die von einer belasteten Verbundplatte auf eine unbelastete benachbarte Verbundplatte übertragen werden. Unter einer solchen Konzentration der Abstützkräfte kann es leicht zu einer Beschädigung der Verbundplatte kommen, insbesondere im oberen Bereich einer Nische. Diese Gefahr ist bei einer Stein-Verbundplatte besonders groß, bei der eine Natursteinplatte mit einer Tragschicht aus Beton verklebt ist. Es hat sich gezeigt, daß die Klebeschicht gegen örtliche Spannungskonzentrationen besonders anfällig ist.

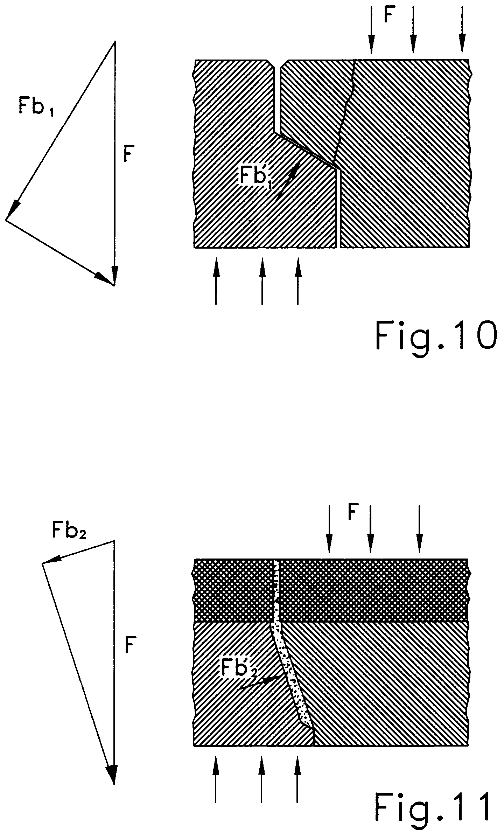

In Fig. 10 ist gezeigt, wie die auf eine Verbundplatte ausgeübte statische Belastung F von einer benachbarten Verbundplatte aufgenommen wird. Wie aus dieser Darstellung hervorgeht, ist die rechtwinklig zu den geneigten Flächen des Nockens und der Nische wirksame Kraftkomponente Fb1' der Abstützkraft steil nach oben gegen den auskragenden Bereich der belasteten Verbundplatte gerichtet. Es besteht daher die Gefahr, daß dieser Bereich bei einer Belastung der Verbundplatte längs der angedeuteten Bruchlinie abbricht, was an der Plattenoberseite sichtbar ist.

Die in den Fig. 8 und 9 gezeigte herkömmliche Ausbildung der Nocken 12 und der Nischen 14 macht beim Verlegen der Verbundplatten eine Horizontalbewegung erforderlich, damit die Nocken 12 und die Nischen 14 ordnungsgemäß ineinandergreifen. Während diese Horizontalbewegung bei der Neuverlegung der Verbundplatten unproblematisch ist, stellt sie bei Reparaturarbeiten eine Erschwernis dar, weil die bereits verlegten Verbundplatten eine solche Horizontalbewegung behindern.

Der Erfindung liegt die Aufgabe zugrunde, eine gattungsgemäße Stein-Verbundplatte zu schaffen, die an die Ebenheit des Untergrundes keine großen Anforderungen stellt und bei der keine örtliche Konzentration von Abstützkräften auftritt, wenn von einer belasteten Verbundplatte Abstützkräfte auf eine benachbarte Verbundplatte übertragen werden.

Erfindungsgemäß ist eine diesem Erfordernis entsprechende Stein-Verbundplatte dadurch gekennzeichnet, daß am unteren Endbereich jedes Nockens eine nach außen vorspringende Zentriernase angeordnet ist, die einen einheitlichen Spalt von bestimmter Breite zwischen den geneigten Flächen ineinandergreifender Nocken und Nischen bewirkt.

Nach dem Verlegen der erfindungsgemäßen Stein-Verbundplatten besteht zwischen deren Seitenflächen und zwischen den geneigten Flächen ineinandergreifender Nocken und Nischen ein einheitlicher Spalt von bestimmter Breite, die ausreichend ist, um sie mit einem Verfugungsmaterial, wie z.B. Mörtel oder Sand auszufüllen. Durch dieses vollständige Ausfüllen der Hohlräume ist gewährleistet, daß horizontale und vertikale Abstützkräfte zwischen benachbarten Platten über die gesamte Seitenfläche übertragen werden.

Bei den bekannten Verbundplatten ist diese Voraussetzung nicht erfüllt, weil der durch Unebenheiten des Untergrunds bedingte Spalt zwischen den geneigten Flächen ineinandergreifender Nocken und Nischen zwar groß genug ist, eine Flächenberührung zu verhindern, aber andererseits zu klein ist, als daß das Verfugungsmaterial diesen Spalt ausfüllen könnte. Es ist das Verdienst der Erfinder, erkannt zu haben, daß durch einen erzwungenen Spalt einer bestimmten Größe ein Ausfüllen desselben mit Verfugungsmaterial und damit eine vollflächige Übertragung von Kräften zwischen benachbarten Verbundplatten möglich ist. Wegen des bewußt vorgesehenen spaltförmigen Zwischenraums zwischen benachbarten Platten ist es auch nicht erforderlich, daß der Untergrund absolut eben ist, weshalb eine kostspielige Bettung aus Beton entfallen kann. Die erfindungsgemäßen Verbundplatten können auf einem verdichteten Unterbau aus Kies mit einem Sandbett verlegt werden, das mit einer Genauigkeit von ± 1 cm abgezogen ist (nach DIN 18318).

Die am unteren Endbereich jedes Nockens angeordnete vorspringende Zentriernase ermöglicht ein "Einfädeln" der Verbundplatten beim Verlegen. Genauer gesagt, die zu verlegende Verbundplatte wird von oben in einer leicht gekippten Lage an eine bereits verlegte Verbundplatte herangeführt, wobei die Zentriernasen in die zugeordneten Nischen eingreifen, und sodann in eine horizontale Lage gebracht. Ein derartiges Einfädeln der Verbundplatten durch Verschwenken ohne nennenswerte Horizontalbewegung ist besonders vorteilhaft, wenn im Zuge von Tiefbaumaßnahmen einzelne Platten aus einem Verbund entfernt und anschließend wieder verlegt werden müssen. Zu diesem Zweck wird bei einer Verbundplatte mit einer Trennsäge die Fuge aufgeschnitten. Diese Verbundplatte kann dann leicht entfernt werden.

Im Hinblick auf die Kraftübertragung zwischen benachbarten Verbundplatten hat es sich als zweckmäßig erwiesen, wenn der Neigungswinkel der nach außen abfallenden Fläche des Nockens und der nach innen abfallenden Fläche der Nische mindestens 45°, vorzugsweise 70° beträgt.

Die Erfindung kann bei solchen Verbundplatten verwirklicht werden, bei denen die Nocken und die Nischen an zwei aneinander gegenüberliegenden Randflächen oder an zwei benachbarten Randflächen der Tragschicht eines Verbundsteins angeordnet sind.

Bei einer sogenannten "Anfängerplatte", mit der beim Verlegen eines Plattenbelages begonnen wird, und die auch als Reparaturplatte dient, sind die Nocken zweckmäßigerweise nur an einer Randfläche angeordnet.

Ein Ausführungsbeispiel der Erfindung ist in der Zeichnung dargestellt und wird nachfolgend näher erläutert. Es zeigt:
Fig. 1 eine schematische perspektivische Darstellung einer erfindungsgemäßen Stein-Verbundplatte,
Fig. 2 eine Draufsicht auf zwei benachbarte Verbundplatten im verlegten Zustand,
Fig. 3 eine Seitenansicht der Verbundplatten nach Fig. 2 teilweise im Schnitt,
Fig. 4 und 5 Draufsichten auf verschiedenartig verlegte Verbundplatten einer ersten Ausführungsform,
Fig. 6 und 7 Draufsichten auf verschiedenartig verlegte Verbundplatten einer zweiten Ausführungsform,
Fig. 8 eine schematische perspektivische Darstellung einer herkömmlichen Verbundplatte,
Fig. 9 eine teilweise geschnittene perspektivische Darstellung des Berührungsbereichs zweier benachbarter herkömmlicher Verbundplatten,
Fig. 10 eine schematische Darstellung der Kraftübertragung zwischen zwei benachbarten herkömmlichen Verbundplatten, und
Fig. 11 eine schematische Darstellung der Kraftübertragung zwischen zwei benachbarten erfindungsgemäßen Verbundplatten.

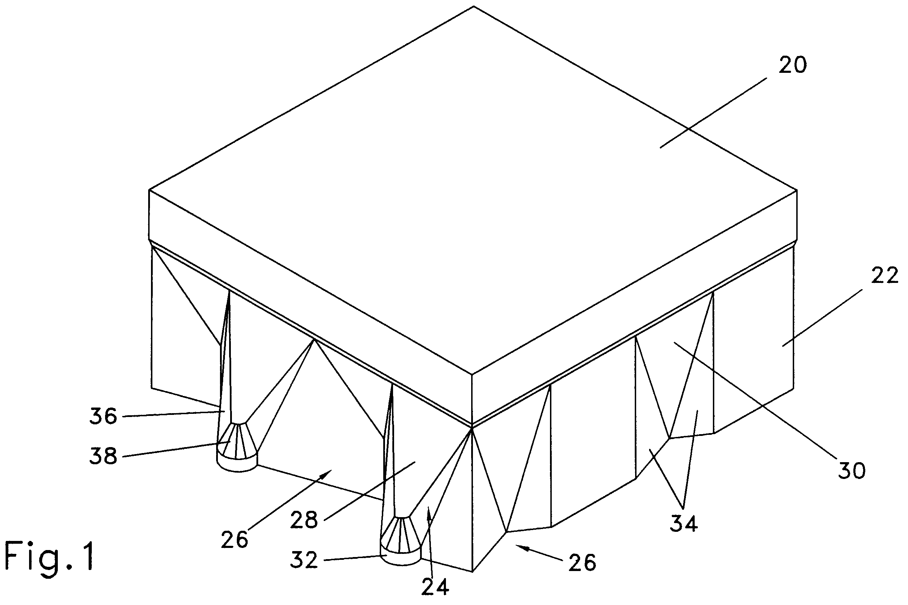

Die in Fig. 1 gezeigte Verbundplatte besteht aus einer Natursteinplatte 20 und einer mit dieser innig verbundenen Tragschicht 22 aus Beton. Bei einer Stein-Verbundplatte ist die dauerhafte Verbindung der quaderförmige Natursteinplatte 20 mit der Tragschicht 22 von entscheidender Bedeutung. Ein für diesen Zweck besonders geeignetes Verfahren und eine Vorrichtung zu dessen Durchführung ist in der EP 0 566 084 A1 offenbart, auf die ausdrücklich Bezug genommen wird.

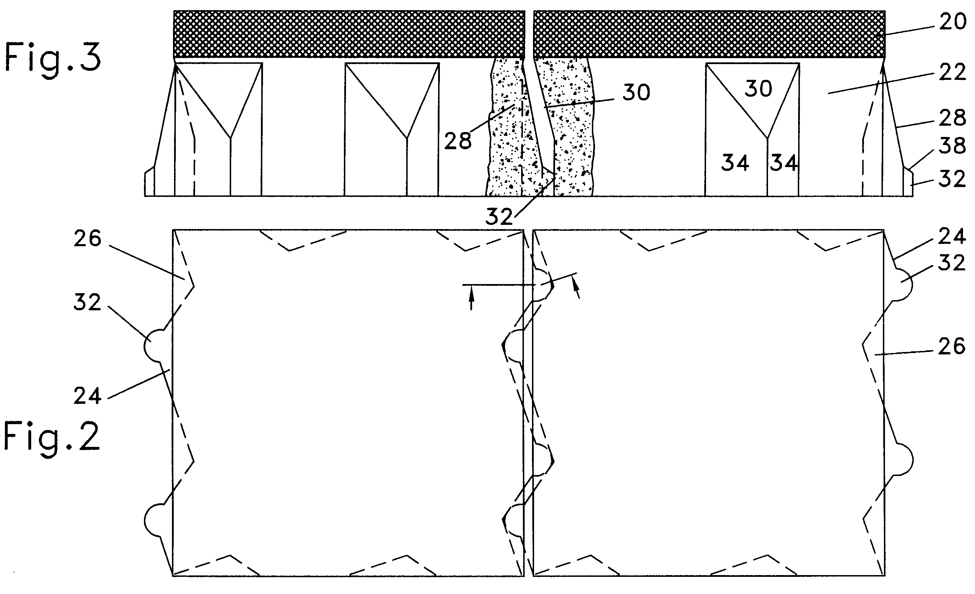

Die Tragschicht 22 aus Beton ist an den vertikalen Seitenflächen mit Nocken 24 und Nischen 26 versehen. Wie dies insbesondere aus Fig. 3 hervorgeht, haben die Nocken 24 nach oben freiliegende, steil nach außen abfallende, näherungsweise dreieckige Flächen 28, und die Nischen 26 haben von oben verdeckte steil nach innen abfallende dreieckige Flächen 30. Am unteren Endbereich jedes Nockens 24 ist eine nach außen vorspringende Zentriernase 32 angeordnet, die bei dem gezeigten Ausführungsbeispiel eine halbkreisförmige Grundfläche hat.

Der Neigungswinkel der nach außen abfallenden Fläche 28 des Nockens 24 und der nach innen abfallenden Fläche 30 der Nische 26 beträgt ungefähr 70°. Die abfallende Fläche 28 des Nockens 24 wird durch zwei Begrenzungsflächen 36 begrenzt, und die abfallende Fläche 30 der Nische 26 wird durch zwei Begrenzungsflächen 34 begrenzt. Jede Zentriernase 32 grenzt mit einer Kegelfläche 38 an die Schrägfläche 28 und an die beiden Begrenzungsflächen 36 an.

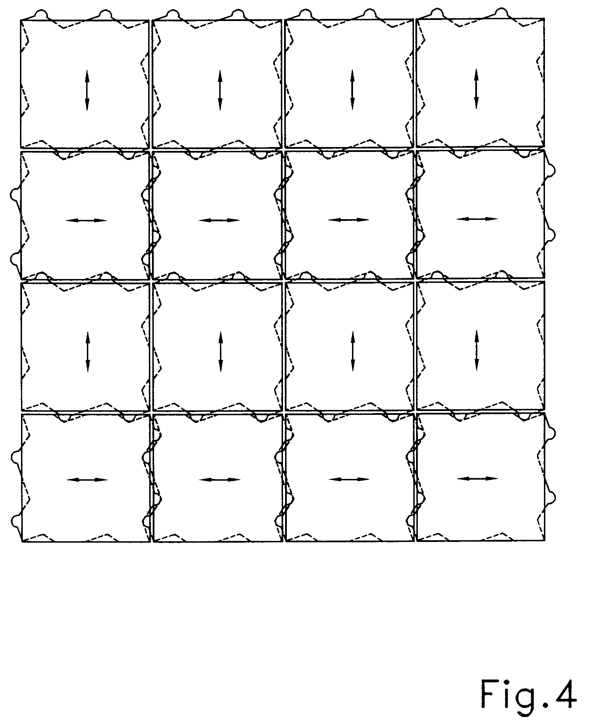

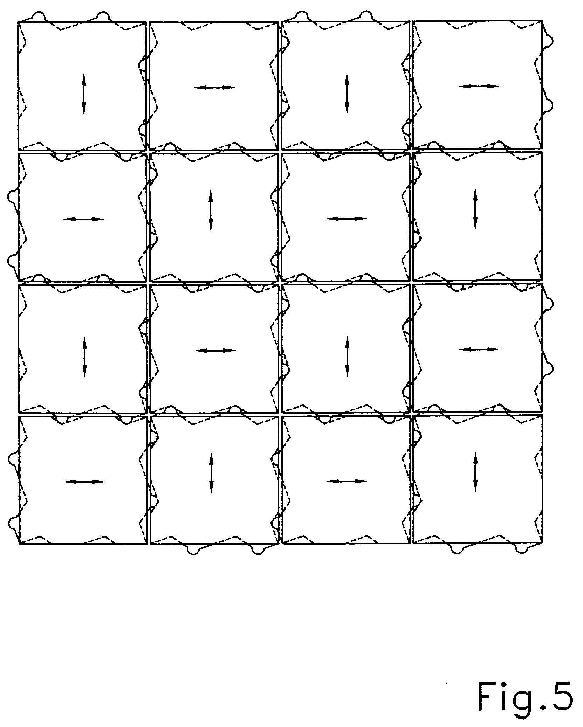

Bei der in den Fig. 1 bis 5 gezeigten ersten Ausführungsform einer Stein-Verbundplatte weist deren Tragschicht 22 an zwei einander gegenüberliegenden Randflächen jeweils zwei Nocken 24 und zwei Nischen 26 auf, wogegen die beiden übrigen Randflächen jeweils zwei Nischen 26 aufweisen. Diese Stein-Verbundplatten können, wie in den Fig. 2 und 4 gezeigt, im Längsverbund oder wie in Fig. 5 gezeigt im Kreuzverbund verlegt werden.

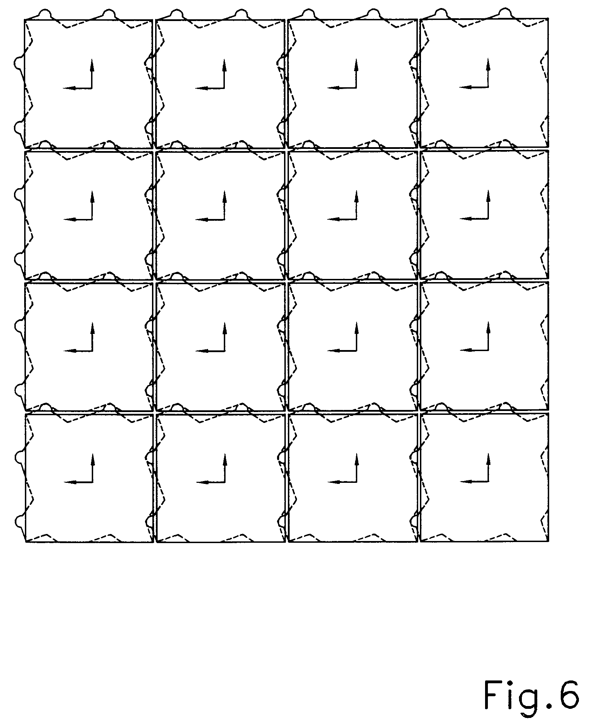

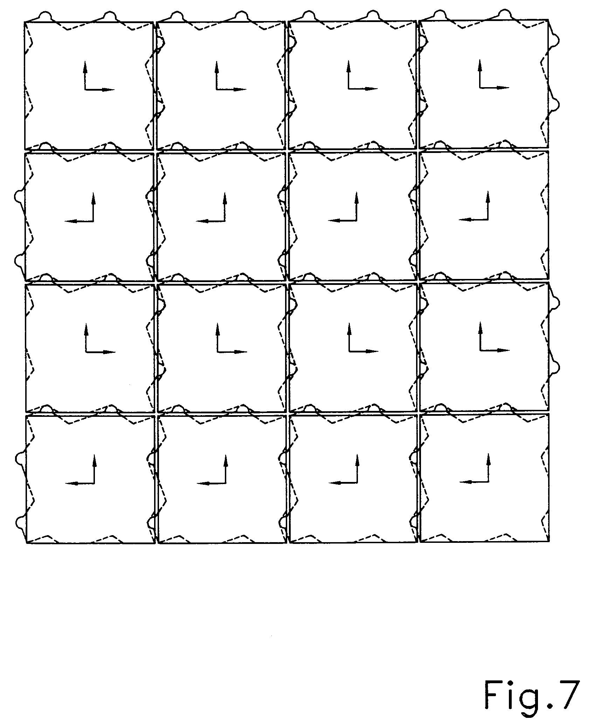

Abweichend von der in Fig. 1 gezeigten ersten Ausführungsform können die Nocken und die Nischen an zwei benachbarten Randflächen der Tragschicht angeordnet sein, während an den beiden übrigen benachbarten Randflächen der Tragschichten jeweils zwei Nischen angeordnet sind. Eine in dieser Weise abgewandelte Stein-Verbundplatte kann, wie in Fig. 6 gezeigt, im Längsverbund oder wie in Fig. 7 gezeigt im Kreuzverbund verlegt sein.

In den Fig. 4 bis 7 ist die Orientierung der Verbundplatten gemäß der ersten bzw. zweiten Ausführungsform durch Doppelpfeile bezeichnet.

Unabhängig von der Art der Verlegung ist bei der ersten wie bei der zweiten Ausführungsform gewährleistet, daß zwischen zwei benachbarten Verbundplatten zwischen den ineinandergreifenden Nocken 24 und Nischen 26 ein geneigter Spalt von einheitlicher Breite eingehalten wird. Wie aus Fig. 2 hervorgeht, ist die Breite dieses Spalts durch die Grundfläche der Zentriernase 32 bestimmt. Die am unteren Ende der Schrägfläche 28 eines Nockens 24 angeordnete Zentriernase 32 gelangt an beiden Begrenzungsflächen 34 einer zugehörigen Nische 26 zur Anlage und bewirkt dadurch die erforderliche Zentrierung und den gewünschten Abstand zwischen zwei benachbarten Verbundplatten. Dieser Abstand ist bewußt groß genug gewählt, damit er mit einem geeigneten Verfugungsmaterial, wie z.B. Mörtel oder Sand, ausgefüllt werden kann. Nach dem Ausfüllen des Spalts wird gewissermaßen eine einstückige Verbindung zwischen benachbarten Verbundplatten erreicht, und zwar auch dann, wenn diese bedingt durch geringe Unebenheiten des Untergrundes nicht genau parallel sein sollten. Durch die Verfüllung des Spalts mit Verfugungsmaterial ist eine vollflächige Übertragung vertikaler und horizontaler Belastungen von einer Verbundplatte auf die benachbarte Verbundplatte gewährleistet. Örtliche übermäßige Belastungen im Bereich der Trennfuge, die zu einem Bruch der Verbundplatte oder zu einer Beeinträchtigung der Klebeschicht zwischen der Natursteinplatte und der Tragschicht führen könnten, sind daher ausgeschlossen.

In Fig. 11 ist gezeigt, wie die auf eine Stein-Verbundplatte ausgeübte statische Belastung F von einer benachbarten Stein-Verbundplatte aufgenommen wird. Wie aus dieser Darstellung hervorgeht, ist die rechtwinklig zu den steil abfallenden Flächen des Nockens und der Nische wirksame Kraftkomponente Fb2' der Abstützkraft nur gering nach oben gerichtet, so daß ein Abbrechen des auskragenden Bereichs der belasteten Stein-Verbundplatte nicht zu befürchten ist. Es kann allenfalls zu einer Beschädigung der Zentriernase oder des sich an dieser abstützenden Bereichs der belasteten Stein-Verbundplatte kommen. Eine derartige Beschädigung kann aber hingenommen werden, weil sie von außen, d.h. an der Oberfläche des Plattenbelags nicht sichtbar ist.

### Bezugszeichenliste:

- 10: Verbundplatte
- 12: Nocken
- 14: Nischen
- 16: Fläche von 12
- 18: Fläche von 14
- 20: Natursteinplatte
- 22: Tragschicht
- 24: Nocken
- 26: Nischen
- 28: Fläche von 24
- 30: Fläche von 26
- 32: Zentriernase
- 34: Begrenzungsflächen von 26
- 36: Begrenzungsflächen von 24
- 38: Kegelfläche von 32

## Patentansprüche

1. Verbundplatte, die an den Randflächen mit Nocken und Nischen versehen ist, die eine dreidimensionale Verzahnung benachbarter Verbundplatten bewirken, wobei die Nocken nach oben freiliegende, schräg nach außen abfallende, im wesentlichen dreieckige oder kegelige Flächen haben und wobei die Nischen von oben verdeckte, schräg nach innen abfallende, im wesentlichen dreieckige oder kegelige Flächen haben, dadurch **gekennzeichnet**, daß am unteren Endbereich jedes Nockens (24) eine nach außen vorspringende Zentriernase (32) angeordnet ist, die einen einheitlichen Spalt von bestimmter Breite zwischen den geneigten Flächen (28, 30) ineinandergreifender Nocken (24) und Nischen (26) bewirkt.

2. Verbundplatte nach Anspruch 1, dadurch **gekennzeichnet**, daß der Neigungswinkel der nach außen abfallenden Fläche (28) des Nockens (24) und der nach innen abfallenden Fläche (30) der Nische (26) mindestens 45°, vorzugsweise 70° beträgt.

3. Verbundplatte nach Anspruch 1 oder 2, dadurch **gekennzeichnet**, daß die Zentriernasen (32) eine halbkreisförmige Grundfläche haben.

4. Verbundplatte nach einem der Ansprüche 1 bis 3, dadurch **gekennzeichnet**, daß die Nocken (24) und die Nischen (26) an zwei einander gegenüberliegenden Randflächen angeordnet sind.

5. Verbundplatte nach einem der Ansprüche 1 bis 3, dadurch **gekennzeichnet**, daß die Nocken und die Nischen an zwei benachbarten Randflächen angeordnet sind.

6. Verbundplatte nach einem der Ansprüche 1 bis 3, dadurch **gekennzeichnet**, daß die Nocken und die Nischen an allen vier Randflächen angeordnet sind.

7. Verbundplatte nach einem der Ansprüpche 1 bis 3, dadurch **gekennzeichnet**, daß die Nocken nur an einer Randfläche angeordnet sind.

8. Verbundplatte nach einem der vorhergehenden Ansprüche, dadurch **gekennzeichnet**, daß sie aus einer Natursteinplatte (20) und einer mit dieser innig verbundenen Tragschicht (22) aus Beton besteht, wobei die Tragschicht (22) mit den Nocken (24), den Zentriernasen (32) und den Nischen (26) versehen ist.
